# EUROPÄISCHE PATENTSCHRIFT

(11) **EP 1 507 323 B1**
(45) Veröffentlichungstag und Bekanntmachung des Hinweises auf die Patenterteilung: **03.10.2012**
(21) Anmeldenummer: 03405592.1
(22) Anmeldetag: 13.08.2003
(51) Int. Cl.: H02B 1/56, H02G 5/10

(54) **Gekapselte Schaltgeräte mit wärmeabführenden Elementen**
Enclosed switchgear with heat-dissipating elements
Installation de commutation blindée avec éléments dissipateurs de chaleur

(43) Veröffentlichungstag der Anmeldung: 16.02.2005
(73) Patentinhaber: ABB Research Ltd., 8050 Zürich (CH)
(72) Erfinder: Pleines, Marianne, CH-8404 Winterthur (CH); Mauroux, Jean-Claude, CH-5502 Hunzenschwil (CH); Lakner, Martin, CH-5413 Birmenstorf (CH); Schoenemann, Thomas, CH-5503 Schafisheim (CH); Ye, Xiangyang, CH-5444 Künten (CH)
(74) Vertreter: ABB Patent Attorneys

(56) Entgegenhaltungen:
- EP-A- 1 022 831
- GB-A- 2 085 238
- US-B1- 6 236 562

## Beschreibung

### TECHNISCHES GEBIET

Die Erfindung bezieht sich auf das Gebiet der Primärtechnik für elektrische Stromerzeugungs- und Stromverteilungsanlagen, insbesondere auf Schaltgeräte für hohe Ströme oder Spannungen in Hoch- oder Mittelspannungsanlagen. Sie geht aus von einer Vorrichtung zum Führen und/oder Schalten hoher Ströme oder Spannungen, insbesondere von einem Schaltgerät, sowie von einer elektrischen Anlage mit einer solcher Vorrichtung gemäss Oberbegriff der unabhängigen Patentansprüche.

### STAND DER TECHNIK

Aus dem Stand der Technik sind diverse Hochspannungsschaltgeräte und Hochstromschaltgeräte bekannt. Besonders gekapselte Hochstromschalter zwischen Generator und Hochspannungstransformator, sogenannte Generatorschalter, sind sehr hohen thermischen Belastungen ausgesetzt. Die Leistungsfähigkeit gekapselter elektrischer Betriebsmittel wird durch die zulässige Höchsttemperatur bestimmt. Während des Nennstrombetriebes darf diese Temperatur nicht überschritten werden, was somit den maximalen Nennstrom des Schaltgerätes limitiert.

Bei einer passiven Kühlung wird die im Betrieb entstehende Wärme durch den Wärmetransport mittels Konvektion, Wärmeleitung und Wärmestrahlung an die Umwelt abgegeben. In dreiphasigen Anordnungen mit einphasig gekapselten Systemen wie den Hochstromschaltgeräten ist die mittlere Phase bezogen auf die Erwärmung am stärksten belastet. Dort ist über die Seitenwände keine Wärmeabgabe durch Strahlung möglich, da die Kapselungstemperatur der mittleren und der äusseren Phasen ähnlich sind. Bei der mittleren Phase geschieht die Wärmeabgabe durch Konvektion und Wärmeleitung. Bei den äusseren zwei Phasen kann immerhin an einer Seitenwand die Wärmeabgabe vollständig, d.h. über Konvektion und Strahlung, erfolgen.

Wird die Wärmeabgabe erhöht, so steigt die Nennstromtragfähigkeit des Betriebsmittels an. Für diesen Zweck sind aktive Luftkühlungen mit Kühlaggregaten oder Klimageräten bekannt. Nachteilig ist die Gefahr von Betriebsausfällen der Kühlung und damit einhergehend die geringe Kundenakzeptanz.

In der EP 1 022 831 wird ein Abschnitt einer elektrischen Hochspannungsanlage mit aktiven Kühlmitteln offenbart. Die Kühlmittel bestehen aus zwei Gebläsen, die innerhalb der Kapselung eines Generatorschalters eine Luftzirkulation erzeugen und damit die Wärmeabgabe vom Stromleiter zum Gehäuse verbessern. Bei dreiphasig nebeneinander angeordneten Generatorschaltern werden durch benachbarte Kapselungsseitenwände zwei kaminartige Kanäle gebildet, in denen eine natürliche oder durch Aussengebläse unterstützte Konvektion stattfindet. Durch eine oder zwei Zwischenwände zwischen benachbarten Kapselungsseitenwänden kann zusätzlich durch Wärmeleitung und Wärmestrahlung Wärmeenergie vom Gehäuse aufgenommen und mit dem konvektiven Luftstrom nach oben abgeführt werden. Offenbart sind auch Zwischenwände mit oberflächenvergrössernden Mitteln zur verbesserten Wärmeabgabe an die Konvektionsströmung. Insbesondere werden Zwischenwände mit vertikal geführten Längsrippen oder vertikal eng oder breit gewellter Struktur offenbart, durch die vertikal geführte Abzugskanäle geschaffen werden.

### DARSTELLUNG DER ERFINDUNG

Aufgabe der vorliegenden Erfindung ist es, elektrische Betriebsmittel zum Führen und/oder Schalten hoher Ströme und/oder Spannungen und eine elektrische Hochspannungsanlage mit solchen Betriebsmitteln anzugeben, die sich durch ein verbessertes Leistungsvermögen und/oder eine kompaktere Bauweise auszeichnen. Diese Aufgabe wird erfindungsgemäss durch die Merkmale der unabhängigen Ansprüche gelöst.

In einem ersten Aspekt besteht die Erfindung in einem Abschnitt einer elektrischen Hochspannungsanlage zum Führen und/oder Schalten hoher Ströme und/oder Spannungen, umfassend elektrische Betriebsmittel für mindestens drei Phasen, wobei die Betriebsmittel in Kapselungen angeordnet und mit Kapselungsdeckeln abgedeckt sind und benachbarte Kapselungen über jeweils mindestens eine Kapselungsseitenwand miteinander in Wärmeaustausch stehen, wobei ferner zwischen zwei Kapselungsseitenwänden mindestens zwei Zwischenplatten angeordnet sind, die zur Wärmeaufnahme von mindestens einer Kapselungsseitenwand und zur Wärmeabgabe an einen zwischen den Kapselungsseitenwänden vertikal aufsteigenden Luftstrom dienen, wobei mindestens eine der mindestens zwei Zwischenplatten eine strömungslenkende Strahlplatte ist, die in einem Luftaustrittsbereich in der Nähe der Kapselungsdeckel mindestens ein Abwinkelungsblech zur Führung mindestens eines Teilluftstroms des aufsteigenden Luftstroms in Richtung auf mindestens einen der Kapselungsdeckel und zur Anströmung des Kapselungsdeckels aufweist. Die Kapselungen oder Gehäuse stehen zueinander in hinreichender räumlicher Nähe, so dass eine direkte Wärmeabstrahlung an die Umgebung durch die einander zugewandten Gehäuseseitenwände behindert ist. Die mindestens eine strömungslenkende Strahlplatte kanalisiert die vertikale Luftströmung erfindungsgemäss in Richtung auf den Deckel, der dadurch eine verbesserte Kühlung erfährt. Im Anlagenabschnitt wird also die Wärmeabgabe durch passive Kühlung auf einfache Weise verbessert. Die Anlage kann somit höhere Betriebsströme tragen und/oder kleiner ausgelegt werden.

Im Ausführungsbeispiel gemäss Anspruch 2 sind die Strahlplatten geschützt vor Aufheizung durch Induktionsströme, welche durch die Kapselung fliessen, oder vor Aufheizung durch Wärmezuleitung, oder sie sind durch Wärmeweiterleitung an die Umgebung zusätzlich passiv gekühlt.

Das Ausführungsbeispiel gemäss Anspruch 3 hat den Vorteil, dass der vertikale Innenluftstrom abgeblockt wird, um eine Anströmung durch den stärker aufgeheizten Innenluftstrom zu verhindern und nur eine Anströmung mit kühlerer Aussenluftströmung zuzulassen.

Die Ausführungsbeispiele gemäss Anspruch 4 und 5 haben den Vorteil, dass durch ein Paar Strahlplatten ein i. a. wärmerer Innenluftstrom und ein i. a. kälterer Aussenluftstrom unabhängig voneinander gelenkt oder geführt werden können, so dass ein möglichst starker und zugleich möglichst kühler Luftstrom den Bereich der Kapselungsdeckel anströmt.

Ansprüche 6-7 zeigen ein vorteilhaftes Zusammenwirken der luftstromlenkenden Strahlplatten mit passiven Kühlkörpern auf dem Gehäusedeckel der Betriebsmittel.

Ansprüche 8-9 geben Kriterien zur vorteilhaften Auslegung und Anordnung der Strahlplatten an.

Die Erfindung hat auch die Strahlplatten selber und eine elektrische Anlage umfassend gekapselte Betriebsmittel mit erfindungsgemässen Strahlplatten zum Gegenstand.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNGEN

- Fig. 1: zeigt im Querschnitt eine 3-phasige Generatorschalter-Anordnung mit erfindungsgemäss abgewinkelten Strahlblechen zwischen den Phasen;
- Fig. 2a-2d: zeigen Ausführungsbeispiele für die Strahlbleche;
- Fig. 3, 4: zeigen schematische Darstellungen der Wärmebilanz mit einem Strahlblech oder zwei Strahlblechen zwischen zwei Phasen; und
- Fig. 5: zeigt Berechnungen der Wärmebilanz mit und ohne Strahlblech.

In den Figuren sind gleiche Teile mit gleichen Bezugszeichen versehen.

### WEGE ZUR AUSFÜHRUNG DER ERFINDUNG

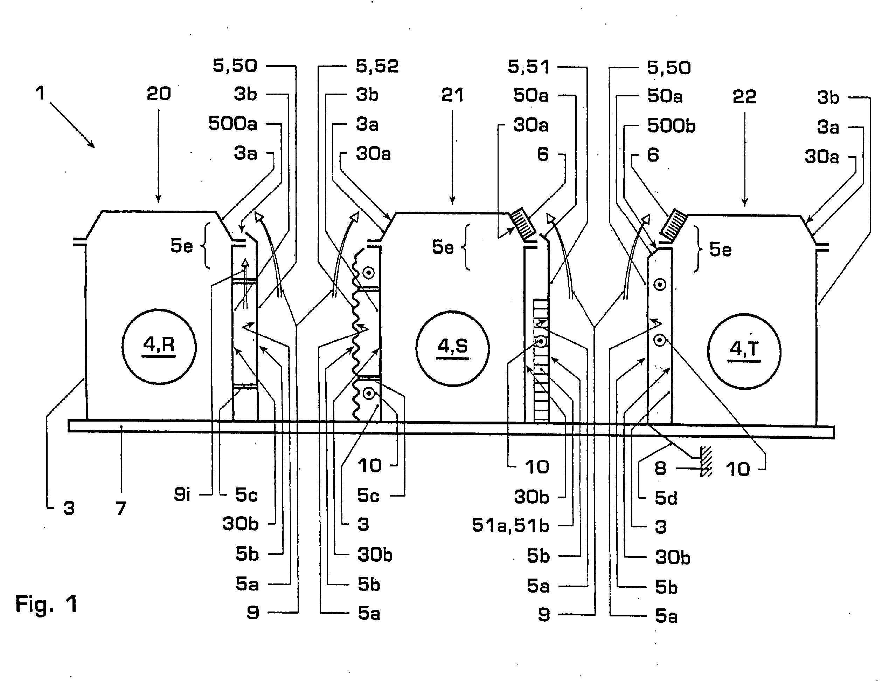

Fig. 1 zeigt im Querschnitt einen Abschnitt 1 einer 3-phasigen Hoch- oder Mittelspannungsanlage mit elektrischen Betriebsmitteln 20, 21 und 22. Eine solche Anlage ist zum Übertragen grosser elektrischer Leistung im Mega- bis Gigawattbereich geeignet. Die hierbei auftretenden Ströme bzw. Spannungen liegen im kA- bzw. kV-Bereich. Eine typische Anlage umfasst mehrphasige Generatorableitungen, in denen in den einzelnen Phasen R, S, T Betriebsströme zwischen 5 und 30 kA und Betriebsspannungen von beispielsweise 10 bis 36 kV auftreten. Eine solche Hochspannungsanlage weist Abschnitte 1 auf, in denen infolge von verhältnismässig grossen Stromverlusten eine starke Erwärmung auftritt. Einer erheblichen Erwärmung sind in dem Abschnitt 1 Kontaktübergänge, etwa Schaltstellen, ausgesetzt. Die im Innenleiter 4 gebildete Wärme wird durch Wärmeleitung an die Ableitungen und über natürliche Konvektion und Strahlung an das Gehäuse 3 abgegeben.

Die Betriebsmittel 20, 21, 22 können also elektrische Apparate, Schaltgeräte, Leitungen, Leitungsabschnitte o. ä. sein, die typischerweise durch hohe Dauerströme bei hohen Spannungen belastet sind und sich entsprechend thermisch aufheizen. Insbesondere handelt es sich um Hochspannungsschaltgeräte oder Hochstromschaltgeräte wie Generatorschalter 20, 21, 22 die beispielhaft dargestellt sind. Jeder Generatorschalter 20, 21, 22 umfasst einen Innenleiter 4 zur Stromführung in einer der Phasen R, S, T und eine Kapselung 3 mit einem Kapselungsdeckel 3a und einem z. B. wannen- oder U-förmigen Kapselungsunterteil 3b. Über die Kapselung 3 fliesst ein Gegenstrom auf Erdpotential, durch den die Magnetfelder des Stroms durch den Innenleiter 4 nach aussen abgeschirmt werden. Die Generatorschalterphasen 20, 21, 22 sind nebeneinander auf einem Polrahmen 7 angeordnet.

In Fig. 1 sind zwischen einander benachbarten und einander zumindest teilweise zugewandten Kapselungsseitenwänden 30b jeweils zwei Strahlplatten 5, 50, 51, 52 angeordnet. Die Strahlplatten 5, 50, 51, 52 weisen typischerweise eine grossflächige Erstreckung parallel zur Kapselungsseitenwand 30b auf und sind relativ dünn entlang einer Verbindungslinie zwischen zwei benachbarten Kapselungen 3, 3 oder Phasen R, S, T. Wenn genau drei Phasen R, S, T vorhanden sind, sollen zwischen der mittleren Phase S und beiden äusseren Phasen R, T jeweils mindestens zwei und vorzugsweise genau zwei Strahlplatten 5, 50, 51, 52 angeordnet sein. An den Aussenwänden der äusseren Phasen R, T werden keine Strahlplatten angebracht. Hier ist auch ohne Strahlplatten der Wärmeaustausch durch Strahlung mit der Umgebung gewährleistet, da die Umgebungstemperatur immer geringer sein wird als die Temperatur der Strahlplatten. An den Aussenseiten der äusseren Kapselung 3 angebrachte Strahlplatten würden sogar als Strahlungsschild wirken und die Wärmeabgabe verschlechtern.

Zwischen benachbarten Kapselungsseitenwänden 30b besteht eine kaminartige, vertikal aufsteigende Luftströmung 9, 9i, so dass eine Wärmeweiterleitung von der Strahlplatte 5 an die Umgebung nur durch Konvektion auftritt. Die Strahlplatten 5 besitzen eine gegenüber der Kapselungsseitenwand abgesenkte Temperatur, da sie nicht stromdurchflossen sind und nur durch Strahlung von den Kapselungsseitenwänden 30b erwärmt werden und zudem gut durch die Konvektion 9, 9i, 10 gekühlt werden. Dadurch kann ein Wärmeaustauschprozess via Strahlung von der Seitenwand 30b in Richtung zur Strahlplatte 5 stattfinden.

Erfindungsgemäss weisen die Strahlplatten 5 in einem Luftaustrittsbereich 5e in der Nähe des Kapselungsdeckels 3a jeweils mindestens ein Abwinkelungsblech 50a zur Führung mindestens eines Teilluftstroms 9 des aufsteigenden Luftstroms 9 in Richtung auf mindestens einen der Kapselungsdeckel 3a, insbesondere auf den zugehörigen oder nächstliegenden Kapselungsdeckel 3a, und zur Anströmung dieses Kapselungsdeckels 3a auf. Die primäre Funktion der Strahlplatten 5 besteht darin, den Strahlungsaustausch zwischen zwei Flächen 30b mit gleicher Temperatur, nämlich den Seitenwänden 30b, zu erhöhen. Durch Ausgestaltung der Strahlplatten 5 als strömungslenkendes Element 5 wird die Wärmeabgabe an den angeströmten Deckeln 3a zusätzlich verbessert. Im folgenden werden bevorzugte Ausführungsbeispiele diskutiert.

Die Strahlplatte 5, 50, 51, 52 ist zur Vermeidung ohmscher Verluste in der Strahlplatte 5, 50, 51, 52 gegenüber der Kapselung 3; 3a, 3b elektrisch isoliert. In der Regel ist dann auch die Strahlplatte 5, 50, 51, 52 gegenüber der Kapselung 3 bezüglich Wärmeleitung isoliert. Hierfür wird die Strahlplatte 5 durch einen isolierenden Distanzhalter oder Montagebolzen 5c an einer Kapselungsseitenwand 30b gehaltert. Vorzugsweise besteht ein wärmeleitender Anschluss 5d der Strahlplatte 5 an eine Wärmesenke 8 ausserhalb des Betriebsmittels 20, 21, 22. Die Strahlplatte 5 kann Kühlrippen aufweisen (nicht dargestellt).

Die Strahlplatten 5, 50, 51, 52 können aus beliebigem Material gefertigt sein, z. B. aus Metall und/oder Kunststoff. Der Strahlungsabsorptionskoeffizient α soll für Infrarot-Wärmestrahlung (IR-Strahlung) hoch, z. B. α>0,9 oder idealerweise α=1 für einen schwarzen Strahler, gewählt sein. Besonders geeignet ist eine Strahlplatte 5, 50, 51, 52 aus Aluminiumblech, das oberflächenbehandelt ist und dadurch einen erhöhten IR-Absorptionskoeffizienten besitzt. Für Freiluftanwendungen soll die Oberfläche weiss sein, um Aufheizung durch Sonnenlicht zu minimieren. Die Aufhängung soll im Fall einer Metallplatte elektrisch isolierend sein. Zum Potentialausgleich soll aber wenigstens an einer Stelle z. B. durch eine metallische Schraube eine leitende Verbindung zum Kapselungspotential vorhanden sein. Bei einer Strahlplatte 5, 50, 51, 52 aus Kunststoff muss die Aufhängung weder isolierend noch potentialausgleichend wirken.

Zur Blockierung eines vertikal aufsteigenden Innenluftstroms 9i zwischen der Seitenwand 30b und der zugehörigen Strahlplatte 5, 50 kann das Abwinkelungsblech 50a mit dem Kapselungsdeckel 3a oder einem oberen Bereich 5e der Kapselungsseitenwand 30b eine formschlüssige Verbindung 500b aufweisen (siehe Phase T in Fig. 1).

Gemäss Fig. 1 sind mit Vorteil zwischen zwei benachbarten Kapselungsseitenwänden 30b genau zwei Strahlplatten 5, 50, 51, 52 mit Abwinkelungen 50a angeordnet. Dabei können die Abwinkelungsbleche 50a jeweils zur zugehörigen Kapselungsseitenwand 30b hin abgewinkelt sein. Die Anzahl der Strahlplatten 5, 50, 51, 52 bestimmt die Wärmeabgabe des Systems. Gemäss Berechnung kann die Wärmeabgabe um 23 % erhöht werden, wenn statt einer zwei Strahlplatten eingebaut sind. Es ist auch möglich, zwischen zwei Kapselungen 3, 3 mehr als zwei Strahlplatten 5, 50, 51, 52 anzubringen. Mittlere Strahlplatten können ohne Abwinkelungsbleche ausgeführt sein. Optimierungsberechnungen haben aber gezeigt, dass es für die Wärmeabgabe ausreichend ist, wenn zwischen zwei Phasen R, S; S, T genau zwei Strahlplatten 5, 50, 51, 52 angebracht werden.

Durch die Anordnung von zwei Strahlplatten 5, 50, 51, 52 kann erreicht werden, dass die kältere Luft zwischen den Strahlplatten 5, 50, 51, 52 zum Kapselungsdeckel 3a hin umgelenkt wird und dass wärmere Luft 10 zwischen jeder Strahlplatte 5, 50, 51, 52 und der zugehörigen Kapselungsseitenwand 30b nicht aufsteigt, sondern entlang der Strahlplatte 5, 50, 51, 52 nach vorne und/oder hinten abströmt. Hierfür ist ein geeignetes Verhältnis von Höhe zu Breite der Strahlplatten 5, 50, 51, 52 zu wählen. Die zwei Strahlplatten 5, 50, 51, 52 sind typischerweise im wesentlichen parallel zueinander angeordnet. Sie weisen jeweils eine der zugehörigen Kapselungsseitenwand 30b zugewandte Innenseite 5a und eine der anderen Strahlplatte 5, 50, 51, 52 zugewandte Aussenseite 5b auf. Zur Erzeugung eines horizontalen Innenluftstroms 10 zwischen der Kapselungsseitenwand 30b und mindestens einer der Strahlplatten 5, 51, 52 auf der Innenseite 5a der Strahlplatte 5, 51, 52 können Luftführungsstrukturen 51a zur seitlichen Umlenkung des Innenluftstroms 10 in horizontaler Richtung vorhanden sein.

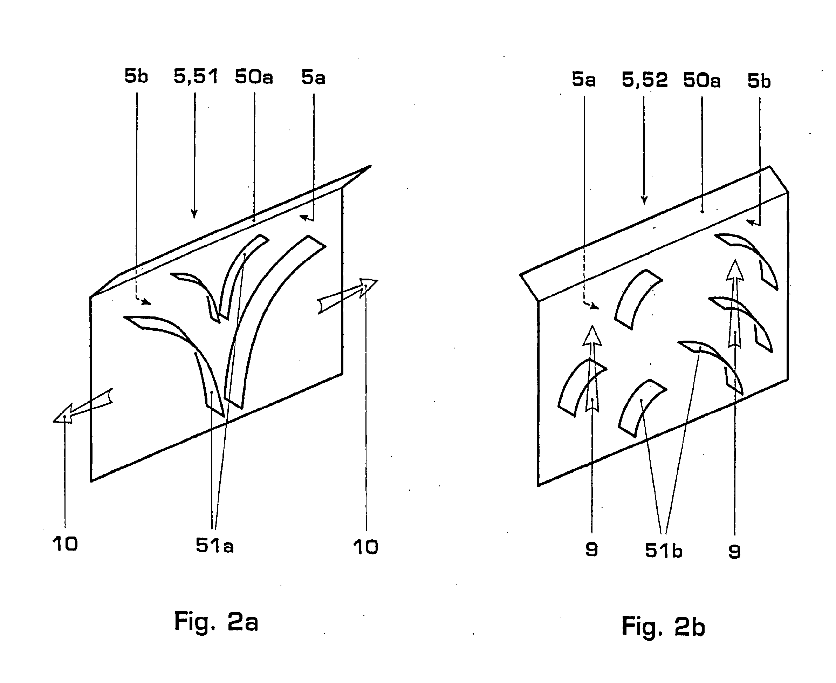

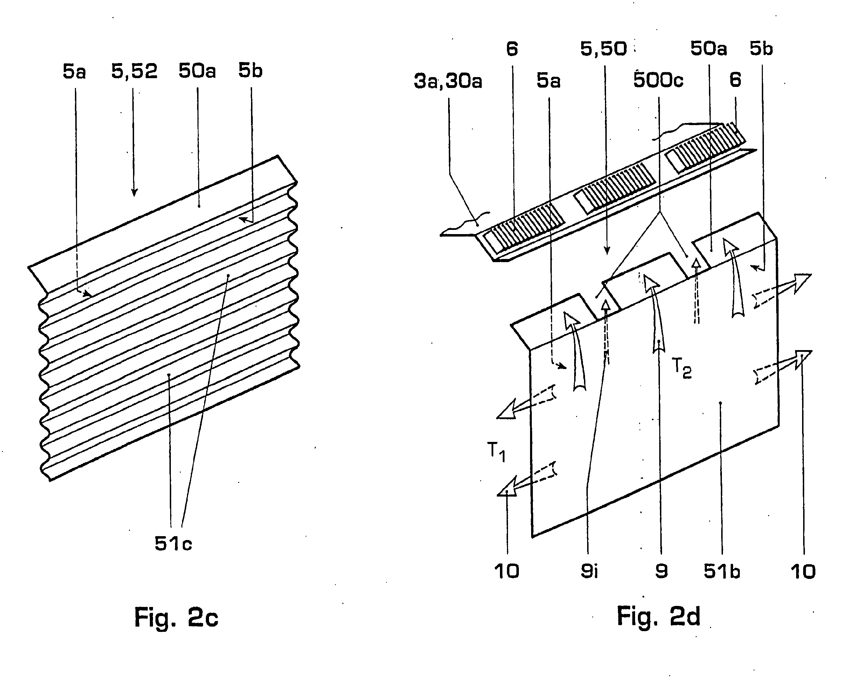

Hierfür sind in Fig. 2a nach seitwärts gebogene, flügelartige Ablenkbleche 51a dargestellt. Die Ablenkbleche 51a begünstigen ein Abströmen nach vorne und/oder hinten auch bei unvorteilhaftem Verhältnis von Höhe zu Breite der Strahlplatten 5, 50, 51, 52. Alternativ oder ergänzend können zur Erzeugung eines turbulenten vertikalen Aussenluftstroms 9 zwischen beiden Strahlplatten 5, 51, 52 auf der Aussenseite 5b mindestens einer der Strahlplatten 5, 51, 52 Verwirbelungsstrukturen 51b, 51c zur Durchmischung des vertikalen Aussenluftstroms 9 vorhanden sein. Hierfür sind in Fig. 2b kurze, vorzugsweise zufällig orientierte und zufällig angeordnete Flügelbleche 51b angegeben. In Fig. 2c ist ein waagrecht gewelltes Wellblech 51c gezeigt, das ebenfalls zur Verwirbelung und Durchmischung des vertikalen Aussenluftstroms 9 dient. Die horizontal gewellten Strukturen 51c können auch auf der Innenseite 5a der Strahlplatten 5, 52 vorhanden sein. Durch Turbulenz wird die konvektive Wärmeabfuhr verbessert.

Der Kapselungsdeckel 3a weist vorzugsweise in einem Randbereich oberhalb der Kapselungsseitenwand 30b eine Abflachung 30a auf, wobei das Abwinkelungsblech 50a im wesentlichen fluchtend zur Abflachung 30a angeordnet ist. Mit Vorteil ist die Abflachung unter 45°±10° zwischen einer horizontalen Erstreckung des Deckels 3a oder eines Deckeloberteils und einer vertikalen Erstreckung der Kapselungsseitenwand 30b orientiert. Ebenso können auf dem Kapselungsdeckel 3a, insbesondere auf der Abflachung 30a, passive Kühlelemente 6 angeordnet sein, die durch den aufsteigenden, von der Strahlplatte 5, 50, 51, 52 geführten Teilluftstrom 9 anströmbar sind.

Gemäss Fig. 2d kann das Abwinkelungsblech 50a an einer luftführenden Aussenkante Ausnehmungen 500c in solchen Bereichen aufweisen, wo keine Kühlelemente 6 auf dem Kapselungsdeckel 3a vorhanden sind, um den dort vertikal aufsteigenden Luftstrom 9i unbehindert zu lassen. Zudem sind die Kühlelemente bevorzugt Kühlrippen 6, die in vertikalen Ebenen angeordnet sind. T₁ bezeichnet die Temperatur der wärmeren Innenluftströmung 10, 9i und T₂ die Temperatur der weniger warmen Aussenluftströmung 9. Allgemein können sich Temperaturunterschiede zwischen T₁ und T₂ bis zu 10 °C einstellen.

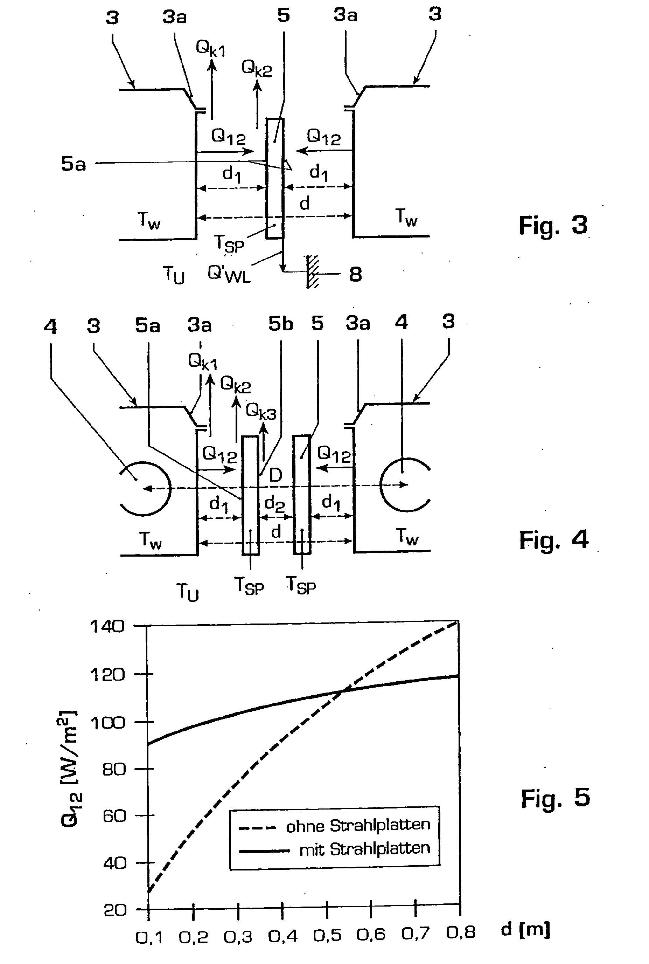

Fig. 3 und 4 zeigen schematisch die Wärmebilanz bei Verwendung eines Strahlbleches 5 oder zweier Strahlbleche 5. Dabei bezeichnen d=Abstand zwischen benachbarten Kapselungsseitenwänden 30b, D=Polabstand, Q_{K1}=konvektive Wärmeabgabe von Seitenwand 30b, Qₖ₂=konvektive Wärmeabgabe von der Innenseite 5a der Strahlplatte 5, Qₖ₃=konvektive Wärmeabgabe von der Aussenseite 5b der Strahlplatte 5, Q₁₂=Strahlungswärmeabgabe von Seitenwand 30b auf Strahlplatte 5, Q_{WL}'=Wärmeleitungswärmeabgabe von Strahlplatte 5 an Umgebung oder Wärmesenke 8, T_{SP}=Strahlplattentemperatur, T_{U}=Umgebungstemperatur und T_{W}=Seitenwandtemperatur. Typische zulässige Grenztemperaturwerte sind 105 °C an Kontaktstellen des Innenleiters 4, 90 °C am Innenleiter 4 der Ableitung und T_{W}=70 °C Kapselungstemperatur. Die Umgebungstemperatur T_{U} kann mit beispielsweise 40 °C angenommen werden. Theoretische Berechnungen haben gezeigt, dass die Strahlplatten 5 zu einer Temperaturabsenkung von bis zu 2 °C am Innenleiter 4 führen. Experimentell wurden 1,5 °C nachgewiesen. Durch die erfindungsgemässen Strahlplatten 5, 50, 51, 52 wurde nicht nur die Temperatur des Innenleiters 4 abgesenkt, sondern ebenfalls die Temperatur T_{w} der Kapselungsseitenwand 30b. Somit kann der zulässige Nennstrom für den betrachteten Generatorschaltertyp ohne aktive Kühlung erhöht werden.

In Fig. 5 ist für die Anordnung gemäss Fig. 4 mit zwei Strahlplatten 5 oder ohne Strahlplatten 5 die resultierende abgestrahlte Wärmemenge Q₁₂ pro Fläche von der Seitenwand 30b als Funktion des Abstands d zwischen benachbarten Seitenwänden 30b dargestellt. Für Abstände d<55 cm, entsprechend einem Polabstand D<1620 mm, ist die Wärmeabstrahlung durch die Strahlplatte 5, 50, 51, 52 deutlich verbessert. Die Strahlplatten 5, 50, 51, 52 sollen nur angebracht werden, wenn nicht mehr genug Raumwinkel vorhanden ist, unter dem von der Kapselungsseitenwand 30b zwischen zwei Phasen R, S, T eine Fläche mit Umgebungstemperatur oder allgemein einer Temperatur tiefer als die Wandtemperatur T_{w} sichtbar ist. Die Anbringung der Strahlplatten 5, 50, 51, 52 ist also abhängig vom Phasen- oder Polabstand D. Es gibt einen minimalen Polabstand D, ab dem auf die Strahlplatten verzichtet werden kann. Ist der Abstand zwischen zwei Strahlplatten nicht mehr klein gegenüber den Abmessungen, so kann genügend Wärme durch Strahlung an den Hintergrund abgegeben werden. Da die Umgebungstemperatur T_{U} immer geringer ist als die Temperatur der Strahlplatten T_{SP}, würden angebrachte Strahlplatten ebenfalls als Strahlungsschild wirken.

Andererseits soll ein Abstand d₁ zwischen der Strahlplatte 5, 50, 51, 52 und der Kapselungsseitenwand 30a oder ein Abstand d₂ zwischen den Strahlplatten 5, 50, 51, 52 hinreichend gross gewählt sein, so dass sich eine freie Grenzschichtströmung 9, 9i, 10 ausbilden kann. Der berechnete Mindestabstand inklusive Sicherheitsmarge beträgt 40 mm. Bei zu eng beabstandeten Strahlplatten 5, 50, 51, 52 kann sich wegen der verschlechterten Konvektion keine optimale Wärmeübertragung ausbilden. Zudem soll die Strahlplatte 5, 50, 51, 52 so zwischen den Kapselungsseitenwänden 30b befestigt sein, dass eine konvektive Luftströmung 9, 9i, 10 weitgehend unbehindert bleibt.

Die Erfindung umfasst auch eine Strahlplatte 5, 50, 51, 52 für einen Anlagenabschnitt 1 und eine elektrische Schaltanlage, insbesondere eine Hoch- oder Mittelspannungsschaltanlage mit einem solchen Anlagenabschnitt 1 wie zuvor beschrieben. Durch die Erfindung können Betriebsmittel 20, 21, 22 mit höheren Nennströmen betrieben werden und/oder Anlagenabschnitte 1 kompakter gebaut werden.

### BEZUGSZEICHENLISTE

- 1: 3-Phasen-Generatorschalter, gekapselte dauerstromführende elektrische Betriebsmittel
- 20, 21, 22: Generatorschalter, Schaltgerät, Phasen; R, S, T
- 3: Gehäuse, Kapselung, Induktionsstromleiter
- 3a: Kapselungsdeckel
- 30a: Abflachung an Kapselungsdeckel
- 3b: Kapselungsunterteil, Wanne
- 30b: der Nachbarphase zugewandte Kapselungsseitenwand
- 4: Innenleiter, Hochstromleiter
- 5, 50, 51, 52: Strahlplatte mit Winkelblech
- 5a: Innenseite der Strahlplatte
- 5b: Aussenseite der Strahlplatte
- 5c: isolierende Montagebolzen, Distanzhalter
- 5d: wärmeleitender Anschluss an Wärmesenke
- 5e: oberer Bereich der Strahlplatte, Luftaustrittsbereich
- 50: Strahlplatte ohne Luftführungsstrukturen
- 50a: Abwinkelung, Winkelblech, Anströmblech
- 500b: formschlüssige Verbindung
- 500c: Ausnehmungen
- 51: Strahlplatte mit Luftführungsblechen
- 52: Strahlplatte mit Verwirbelungsblechen
- 51a: seitliches Ablenkblech, Zweiflügelblech
- 51b: Verwirbelungsbleche, Einflügelblech
- 51c: Luftführungsbleche, Verwirbelungsblech
- 6: Kühlrippen
- 7: Polrahmen, Tragrahmen
- 8: Wärmesenke
- 9, 9i: vertikale Luftströmung
- 10: horizontale Luftströmung
- d, d₁, d₂: Abstände zwischen Kapselungsseitenwänden und/oder Strahlplatten
- D: Polabstand, Abstand zwischen den Phasen
- Q_{K}, Qₖ₁, Qₖ₂, Qₖ₃: konvektive Wärmeabgabe
- Q₁₂: Strahlungswärmeabgabe, von Seitenwand abgestrahlte Wärmemenge pro Fläche
- Q_{WL}': Wärmeleitungswärmeabgabe
- T₁, T₂: Lufttemperaturen
- T_{SP}: Strahlplattentemperatur
- T_{U}: Umgebungstemperatur
- T_{W}: Wandtemperatur

## Patentansprüche

1. Abschnitt (1) einer elektrischen Hochspannungsanlage zum Führen und/oder Schalten hoher Ströme und/oder Spannungen, umfassend elektrische Betriebsmittel (20, 21, 22) für mindestens drei Phasen (R, S, T), wobei die Betriebsmittel (20, 21, 22) in Kapselungen (3) angeordnet und mit Kapselungsdeckeln (3a) abgedeckt sind und benachbarte Kapselungen (3) über jeweils mindestens eine Kapselungsseitenwand (30b) miteinander in Wärmeaustausch stehen, wobei ferner zwischen zwei Kapselungsseitenwänden (30b) mindestens zwei Zwischenplatten angeordnet sind, die zur Wärmeaufnahme von mindestens einer Kapselungsseitenwand (30b) und zur Wärmeabgabe an einen zwischen den Kapselungsseitenwänden (30b) vertikal aufsteigenden Luftstrom (9) dienen, **dadurch gekennzeichnet, dass** mindestens eine der Zwischenplatten eine strömungslenkende Strahlplatte (5, 50, 51, 52) ist, die in einem Luftaustrittsbereich (5e) in der Nähe der Kapselungsdeckel (3a) mindestens ein Abwinkelungsblech (50a) zur Führung mindestens eines Teilluftstroms (9) des aufsteigenden Luftstroms (9) in Richtung auf mindestens einen der Kapselungsdeckel (3a) und zur Anströmung des Kapselungsdeckels (3a) aufweist.

2. Der Anlagenabschnitt (1) nach Anspruch 1, **dadurch gekennzeichnet, dass** die Strahlplatte oder Strahlplatten (5, 50, 51, 52)
a) zur Vermeidung ohmscher Verluste gegenüber der Kapselung (3) elektrisch isoliert ist oder sind und ein Potentialausgleich vorhanden ist und/oder
b) gegenüber der Kapselung (3) bezüglich Wärmeleitung isoliert ist oder sind und/oder
c) zur zusätzlichen Wärmeabgabe durch Wärmeleitung (Q_{wl}') mit einer Wärmesenke (8) thermisch leitend verbunden ist oder sind.

3. Der Anlagenabschnitt (1) nach einem der vorangehenden Ansprüche, **dadurch gekennzeichnet, dass** zur Blockierung eines vertikal aufsteigenden Innenluftstroms (9i) zwischen der Kapselungsseitenwand (30b) und der zugehörigen Strahlplatte (5, 50, 51, 52) das Abwinkelungsblech (50a) mit dem Kapselungsdeckel (3a) oder einem oberen Bereich 5e der Kapselungsseitenwand (30b) eine formschlüssige Verbindung (500b) aufweist.

4. Der Anlagenabschnitt (1) nach einem der vorangehenden Ansprüche, **dadurch gekennzeichnet, dass**
a) zwischen zwei benachbarten Kapselungsseitenwänden (30b) genau zwei Strahlplatten (5, 50, 51, 52) angeordnet sind, die jeweils eine der zugehörigen Kapselungsseitenwand (30) zugewandte Innenseite (5a) und eine der anderen Strahlplatte (5, 50, 51, 52) zugewandte Aussenseite (5b) aufweisen und
b) jede Strahlplatte (5, 50, 51, 52) ein zur zugehörigen Kapselungsseitenwand (30b) hin abgewinkeltes Abwinkelungsblech (50a) aufweist.

5. Der Anlagenabschnitt (1) nach Anspruch 4, **dadurch gekennzeichnet, dass**
a) zur Erzeugung eines horizontalen Innenluftstroms (10) zwischen der Kapselungsseitenwand (30b) und mindestens einer der Strahlplatten (5, 51, 52) auf der Innenseite (5a) der Strahlplatte (5, 51, 52) Luftführungsstrukturen (51a) zur seitlichen Ablenkung des horizontalen Innenluftstroms (10) vorhanden sind und/oder
b) zur Erzeugung eines vertikalen Aussenluftstroms (9) zwischen beiden Strahlplatten (5, 51, 52) auf der Aussenseite (5b) mindestens einer der Strahlplatten (5, 51, 52) Verwirbelungsstrukturen (51b, 51c) zur Durchmischung des vertikalen Aussenluftstroms (9) vorhanden sind.

6. Der Anlagenabschnitt (1) nach einem der vorangehenden Ansprüche, **dadurch gekennzeichnet, dass**
a) die Kapselungsdeckel (3a) in einem Randbereich oberhalb der Kapselungsseitenwand (30b) eine Abflachung (30a) aufweisen und die jeweiligen Abwinkelungsbleche (50a) im wesentlichen fluchtend zur Abflachung (30a) angeordnet sind und/oder
b) auf den Kapselungsdeckeln (3a), insbesondere auf einer Abflachung (30a) der Kapselungsdeckel (3a), passive Kühlelemente (6) angeordnet sind, die durch den aufsteigenden, von den Strahlplatten (5, 50, 51, 52) geführten Teilluftstrom (9) anströmbar sind.

7. Der Anlagenabschnitt (1) nach Anspruch 6, **dadurch gekennzeichnet, dass**
a) die Abwinkelungsbleche (50a) an einer luftführenden Aussenkante Ausnehmungen (500c) in solchen Bereichen aufweisen, wo keine Kühlelemente (6) auf den Kapselungsdeckeln (3a) vorhanden sind, um den dort vertikal aufsteigenden Luftstrom (9i) unbehindert zu lassen und/oder
b) auf den Kapselungsdeckeln (3a) angeordnete Kühlelemente Kühlrippen (6) aufweisen, die in vertikalen Ebenen angeordnet sind.

8. Der Anlagenabschnitt (1) nach einem der vorangehenden Ansprüche, **dadurch gekennzeichnet, dass**
a) zwischen den Strahlplatten (5, 50, 51, 52) und den zugehörigen Kapselungsseitenwänden (30a) und/oder zwischen den Strahlplatten (5, 50, 51, 52) ein hinreichender Abstand (d₁, d₂) gewählt ist, so dass sich eine freie Grenzschichtströmung (9, 9i, 10) ausbilden kann und/oder
b) die Strahlplatten (5, 50, 51, 52) so zwischen den Kapselungsseitenwänden (3a) befestigt sind, dass eine konvektive Luftströmung (9, 9i, 10) weitgehend unbehindert ist.

9. Der Anlagenabschnitt (1) nach einem der vorangehenden Ansprüche, **dadurch gekennzeichnet, dass**
a) die Strahlplatten (5, 50, 51, 52) Metallplatten, insbesondere weiss gefärbte Aluminiumbleche, mit einer elektrisch isolierenden Aufhängung und/oder Kunststoffplatten sind und/oder
b) drei Phasen (R, S, T) vorhanden sind und zwischen der mittleren Phase (S) und beiden äusseren Phasen (R, T) jeweils zwei Strahlplatten (5, 50, 51, 52) angeordnet sind und/oder
c) die Betriebsmittel (20, 21, 22) Hochstromschaltgeräte (20, 21, 22), insbesondere Generatorschalter (20, 21, 22), oder Hochspannungsschaltgeräte sind.

10. Strahlplatte für einen Anlagenabschnitt (1) gemäss einem der vorangehenden Ansprüche.

11. Elektrische Anlage, insbesondere Hoch- oder Mittelspannungsschaltanlage, **gekennzeichnet durch** einen Anlagenabschnitt (1) gemäss einem der vorangehenden Ansprüche.

## Claims

1. Section (1) of an electrical high-voltage system for carrying and/or switching heavy currents and/or high voltages, comprising electrical equipment items (20, 21, 22) for at least three phases (R, Y, B), with the equipment items (20, 21, 22) being arranged in encapsulation (3) and being covered by encapsulation covers (3a), and adjacent encapsulations (3) exchanging heat with one another via in each case at least one encapsulation side wall (30b), with at least two intermediate plates furthermore being arranged between two encapsulation side walls (30b) and being used for heat absorption from at least one encapsulation side wall (30b) and for heat emission to an air flow (9) which rises vertically between the encapsulation side walls (30b), **characterized in that** at least one of the intermediate plates is a flow-guiding radiation plate (5, 50, 51, 52) which has at least one angled metal sheet (50a) in an air outlet area (5e) in the vicinity of the encapsulation cover (3a), in order to guide at least one air flow element (9) of the rising air flow (9) in the direction of at least one of the encapsulation covers (3a) and in order to direct the flow at the encapsulation cover (3a).

2. The system section (1) according to Claim 1, **characterized in that** the radiation plate or radiation plates (5, 50, 51, 52)
a) is or are electrically isolated from the encapsulation (3), and potential bonding is provided, in order to avoid resistive losses, and/or
b) is or are thermally conductively isolated from the encapsulation (3), and/or
c) is or are thermally conductively connected to a heat sink (8) for additional heat emission by means of the thermal conduction (Q_{wl}').

3. The system section (1) according to one of the preceding claims, **characterized in that** the angled metal sheet (50a) has an interlocking connection (500b) to the encapsulation cover (3a) or to an upper area (5e) of the encapsulation side wall (30b) in order to block a vertically rising inner air flow (9i) between the encapsulation side wall (30b) and the associated radiation plate (5, 50, 51, 52).

4. The system section (1) according to one of the preceding claims, **characterized in that**
a) two, and only two, radiation plates (5, 50, 51, 52) are arranged between two adjacent encapsulation side walls (30b) and each have an inner face (5a), facing the associated encapsulation side wall (30b), and an outer face (5b), facing the other radiation plate (5, 50, 51, 52), and
b) each radiation plate (5, 50, 51, 52) has an angled metal sheet (50a) which is angled towards the associated encapsulation side wall (30b).

5. The system section (1) according to Claim 4, **characterized in that**
a) in order to produce a horizontal inner air flow (10) between the encapsulation side wall (30b) and at least one of the radiation plates (5, 51, 52), air guidance structures (51a) are provided on the inner face (5a) of the radiation plate (5, 51, 52) in order to deflect the horizontal inner air flow (10) to the side, and/or
b) in order to produce a vertical outer air flow (9) between the two radiation plates (5, 51, 52), swirling structures (51b, 51c) are provided on the outer face (5b) of at least one of the radiation plates (5, 51, 52) in order to thoroughly mix the vertical outer air flow (9).

6. The system section (1) according to one of the preceding claims, **characterized in that**
a) in an edge area above the encapsulation side walls (30b), the encapsulation covers (3a) have a flattened area (30a) and the respective angled metal sheets (50a) are arranged such that they are essentially aligned with the flattened area (30a), and/or
b) passive cooling elements (6) are arranged on the encapsulation covers (3a), in particular on a flattened area (30a) of the encapsulation covers (3a), onto which the rising air flow element (9) which is guided by the radiation plates (5, 50, 51, 52) can be directed.

7. The system section (1) according to Claim 6, **characterized in that**
a) the angled metal sheets (50a) have recesses (500c) on one air-guiding outer edge, in those areas where there are no cooling elements (6) on the encapsulation covers (3a), in order to avoid impeding the vertically rising air flow (9i) there, and/or
b) cooling elements which are arranged on the encapsulation covers (3a) have cooling ribs (6) which are arranged on vertical planes.

8. The system section (1) according to one of the preceding claims, **characterized in that**
a) a sufficient separation (d₁, d₂) is chosen between the radiation plates (5, 50, 51, 52) and the associated encapsulation side walls (30b) and/or between the radiation plates (5, 50, 51, 52), such that a free boundary layer flow (9, 9i, 10) can be formed, and/or
b) the radiation plates (5, 50, 51, 52) are mounted between the encapsulation side walls (30b) so as not to significantly impede a convective air flow (9, 9i, 10).

9. The system section (1) according to one of the preceding claims, **characterized in that**
a) the radiation plates (5, 50, 51, 52) are metal plates, in particular white-colored aluminum metal sheets, having an electrically insulating suspension and/or plastic panels, and/or
b) there are three phases (R, Y, B) and two radiation plates (5, 50, 51, 52) are in each case arranged between the central phase (Y) and the two outer phases (R, B) and/or
c) the equipment items (20, 21, 22) are heavy-current switching devices (20, 21, 22), in particular generator switches (20, 21, 22) or high-voltage switching devices.

10. Radiation plate for a system section (1) according to one of the preceding claims.

11. Electrical system, in particular high-voltage or medium-voltage switchgear assembly, **characterized by** a system section (1) according to one of the preceding claims.

## Revendications

1. Portion (1) d'une installation électrique à haute tension pour conduire et/ou commuter des courants et/ou des tensions élevés, comprenant des moyens opérationnels électriques (20, 21, 22) pour au moins trois phases (R, S, T), les moyens opérationnels (20, 21, 22) étant disposés dans des enveloppes (3) et étant recouverts par des couvercles d'enveloppe (3a) et les enveloppes (3) voisines se trouvant en échange thermique mutuel respectivement par le biais d'au moins une paroi latérale d'enveloppe (30b), au moins deux plaques intermédiaires étant en outre disposées entre deux parois latérales d'enveloppe (30b), lesquelles servent pour absorber la chaleur d'au moins une paroi latérale d'enveloppe (30b) et pour dissiper la chaleur vers un courant d'air ascendant (9) vertical entre les parois latérales d'enveloppe (30b), **caractérisée en ce qu'**au moins l'une des plaques intermédiaires est une plaque rayonnante (5, 50, 51, 52) guidant le courant, laquelle présente, dans une zone de sortie de l'air (5e) à proximité du couvercle d'enveloppe (3a), au moins une tôle coudée (50a) destinée à guider au moins un courant d'air partiel (9) du courant d'air ascendant (9) en direction d'au moins l'un des couvercles d'enveloppe (3a) et pour diffuser le courant sur le couvercle d'enveloppe (3a).

2. Portion d'installation (1) selon la revendication 1, **caractérisée en ce que** la plaque rayonnante ou les plaques rayonnantes (5, 50, 51, 52)
a) est ou sont isolée(s) électriquement par rapport à l'enveloppe (3) pour éviter des pertes ohmiques et il existe un équilibrage des potentiels et/ou
b) est ou sont isolée(s) du point de vue de la conduction thermique par rapport à l'enveloppe (3) et/ou
c) est ou sont reliée(s) de manière thermiquement conductrice avec un dissipateur thermique (8) en vue d'une dissipation de chaleur supplémentaire par conduction thermique (Q_{wl}').

3. Portion d'installation (1) selon l'une des revendications précédentes, **caractérisée en ce que** pour bloquer un courant d'air intérieur ascendant (9i) vertical entre la paroi latérale d'enveloppe (30b) et la plaque rayonnante (5, 50, 51, 52) correspondante, la tôle coudée (50a) présente une liaison par complémentarité de formes (500b) avec le couvercle d'enveloppe (3a) ou une zone supérieure (5e) de la paroi latérale d'enveloppe (30b).

4. Portion d'installation (1) selon l'une des revendications précédentes, **caractérisée en ce que**
a) exactement deux plaques rayonnantes (5, 50, 51, 52) sont disposées entre deux parois latérales d'enveloppe (30b) voisines, lesquelles présentent à chaque fois un côté intérieur (5a) qui fait face à la paroi latérale d'enveloppe (30b) associée et un côté extérieur (5b) qui fait face à l'une des autres plaques rayonnantes (5, 50, 51, 52) et
b) chaque plaque rayonnante (5, 50, 51, 52) présente une tôle coudée (50a) coudée en direction de la paroi latérale d'enveloppe (30b) associée.

5. Portion d'installation (1) selon la revendication 4, **caractérisée en ce que**
a) pour générer un courant d'air intérieur horizontal (10) entre la paroi latérale d'enveloppe (30b) et au moins l'une des plaques rayonnantes (5, 51, 52), il existe sur le côté intérieur (5a) de la plaque rayonnante (5, 51, 52) des structures de guidage d'air (51a) pour dévier latéralement le courant d'air intérieur horizontal (10) et/ou
b) pour générer un courant d'air extérieur vertical (9) entre les deux plaques rayonnantes (5, 51, 52), il existe sur le côté extérieur (5b) d'au moins l'une des plaques rayonnantes (5, 51, 52) des structures de tourbillonnement (51b, 51c) pour mélanger le courant d'air extérieur vertical (9).

6. Portion d'installation (1) selon l'une des revendications précédentes, **caractérisée en ce que**
a) les couvercles d'enveloppe (3a) présentent dans une zone de bordure au-dessus de la paroi latérale d'enveloppe (30b) un aplatissement (30a) et les tôles coudées (50a) respectives sont disposées pour l'essentiel à fleur de l'aplatissement (30a) et/ou
b) des éléments de refroidissement passifs (6) sont disposés sur les couvercles d'enveloppe (3a), notamment sur un aplatissement (30a) des couvercles d'enveloppe (3a), sur lesquels peut être diffusé le courant d'air partiel (9) ascendant guidé par les plaques rayonnantes (5, 50, 51, 52).

7. Portion d'installation (1) selon la revendication 6, **caractérisée en ce que**
a) les tôles coudées (50a) présentent sur un bord extérieur de guidage de l'air des évidements (500c) dans les zones où il n'existe pas d'éléments de refroidissement (6) sur les couvercles d'enveloppe (3a) afin de ne pas gêner le courant d'air vertical ascendant (9i) qui y passe et/ou
b) les éléments de refroidissement disposés sur les couvercles d'enveloppe (3a) présentent des ailettes de refroidissement (6) qui sont disposées dans des plans verticaux.

8. Portion d'installation (1) selon l'une des revendications précédentes, **caractérisée en ce que**
a) un espace (d₁, d₂) suffisant est choisi entre les plaques rayonnantes (5, 50, 51, 52) et les parois latérales d'enveloppe (30b) associées et/ou entre les plaques rayonnantes (5, 50, 51, 52), de sorte qu'un écoulement interfacial libre (9, 9i, 10) puisse se former et/ou
b) les plaques rayonnantes (5, 50, 51, 52) sont fixées entre les parois latérales d'enveloppe (30b) de manière à empêcher largement un écoulement d'air convectif (9, 9i, 10).

9. Portion d'installation (1) selon l'une des revendications précédentes, **caractérisée en ce que**
a) les plaques rayonnantes (5, 50, 51, 52) sont des plaques métalliques, notamment des tôles en aluminium colorées en blanc, munies d'un dispositif d'accrochage électriquement isolant et/ou des plaques en matière plastique et/ou
b) il existe trois phases (R, S, T) et deux plaques rayonnantes (5, 50, 51, 52) sont à chaque fois disposées entre la phase centrale (S) et les deux phases extérieures (R, T) et/ou
c) les moyens opérationnels (20, 21, 22) sont des appareils de commutation à courant fort (20, 21, 22), notamment des commutateurs de générateur (20, 21, 22), ou des appareils de commutation à haute tension.

10. Plaque rayonnante pour une portion d'installation (1) selon l'une des revendications précédentes.

11. Installation électrique, notamment installation de commutation à haute ou à moyenne tension, **caractérisée par** une portion d'installation (1) selon l'une des revendications précédentes.
